# EUROPEAN PATENT APPLICATION

(11) **EP 4 617 043 A1**
(43) Date of publication of application: **17.09.2025**
(21) Application number: 22964945.4
(22) Date of filing: 01.12.2022
(51) Int. Cl.: B29C 64/20, B33Y 30/00

(54) **LIQUID CONTAINING DEVICE FOR 3D PRINTING AND 3D PRINTER**

(30) Priority: 08.11.2022 CN 202211389542; 08.11.2022 CN 202222967458 U; 08.11.2022 CN 202222963195 U
(71) Applicant: Zhejiang Xunshi Technology Co., Ltd., Shaoxing, Zhejiang 312065 (CN)
(72) Inventor: ZHANG, Jing, Shaoxing, Zhejiang 312065 (CN); GAO, Zhongyu, Shaoxing, Zhejiang 312065 (CN); WANG, Difeng, Shaoxing, Zhejiang 312065 (CN); CHEN, Ming, Shaoxing, Zhejiang 312065 (CN); WANG, Dongjian, Shaoxing, Zhejiang 312065 (CN); JIN, Liang, Shaoxing, Zhejiang 312065 (CN)
(74) Representative: Ström & Gulliksson AB
(86) International application number: PCT/CN2022/135800
(87) International publication number: WO 2024/098479

(57) **Abstract**

The present application, relating to the technical field of 3D printing, discloses a liquid containing device for 3D printing, including: a fixing structure and a layered film separating structure, at least a part of the fixing structure constitutes a side wall of the liquid containing device, and the liquid containing device is configured to be capable of being fixed on a mounting base of a 3D printer by the fixing structure; at least a part of the film separating structure constitutes a bottom of the liquid containing device and forms, together with the fixing structure, a liquid containing space for accommodating a liquid printing material; and the film separating structure comprises a light-transmissive release film, an elastic plate and a basal plate. The device can eliminate vacuum suction force between the release film and the elastic plate, to significantly reduce film separating force and thus effectively shorten molding time of 3D printing.

## Description

### Field of the Invention

The present application relates to the technical field of 3D printing, and in particular a liquid containing device for 3D printing and a 3D printer.

### Description of the Prior art

In 3D printing, liquid photosensitive resin is cured in a specified region between a printing platform and a resin tank, and the cured liquid photosensitive resin, i.e., a cured model, is removed from the printing platform after printing is completed, to complete printing of the cured model. However, since the liquid photosensitive resin is bonded to the resin tank during curing, it is generally required that the cured liquid photosensitive resin is moved by being driven by the printing platform, so as to disengage the cured liquid photosensitive resin from the resin tank.

In a conventional 3D printing technique, a bottom of the resin tank is a light-transmissive basal plate, i.e., a glass plate, and in a film separating process, since the cured model and the basal plate has a large bonding area therebetween and are directly separated, film separating force is excessively large (force bonding the cured model to the light-transmissive basal plate) to easily cause the following problems: 1. loosening of an installed light-transmissive basal plate occurs, and after the loosening of the basal plate, which is a print reference plane, the accuracy of the cured model may be reduced; 2. a noise is relatively loud; and 3. the cured model is easily subjected to risks of edge lifting and plate falling-off when film separating.

Therefore, those skilled in the art are dedicated to developing a liquid containing device for 3D printing and a 3D printer, to reduce film separating force.

### Summary of the Invention

In view of the defects described above in the prior art, the present application is to solve a technical problem including how to improve a film separating effect by reducing film separating force.

The present application provides a liquid containing device for 3D printing, comprising: a fixing structure, at least a part of the fixing structure constituting a side wall of the liquid containing device, and the liquid containing device being configured to be capable of being fixed on a mounting base of a 3D printer by the fixing structure; and a layered film separating structure, at least a part of the film separating structure constituting a bottom of the liquid containing device and forming, together with the fixing structure, a liquid containing space for accommodating a liquid printing material; wherein the film separating structure comprises a light-transmissive release film.

Further, the film separating structure further comprises: an elastic plate disposed below the release film; and a basal plate disposed below the elastic plate, and a gap being present between the basal plate and the elastic plate to form a fluid channel between the basal plate and the elastic plate.

Further, the elastic plate, the basal plate and the release film are transparent.

Further, the fixing structure comprises an annular frame and an annular bottom bracket, and the bottom bracket is disposed below the frame.

Further, the frame constitutes a side wall of the liquid containing device, and the liquid containing device is fixed on the base of the 3D printer by the bottom bracket; and the film separating structure is fixed between the frame and the bottom bracket.

Further, an inner side of the bottom bracket extends inwardly to form a rib on which the basal plate is mounted.

Further, a spacer is provided between the basal plate and the elastic plate to form a gap between the basal plate and the elastic plate.

Further, the spacer is an separated FEP tape disposed in an array arrangement on the basal plate and arranged at an edge position of a projection plane of the elastic plate on the basal plate.

Further, the elastic plate is made of one or more types of glass of: soda-lime glass, medium-alumina glass, and high-alumina glass.

Further, the release film is made of one or more materials of: FEP, NFEP, TPX, and AF2400.

Further, the release film is a semipermeable film.

Further, the elastic plate is coated with a layer of a PET thin film.

Further, at least one of opposing surfaces of the elastic plate and the basal plate is a rough surface.

Further, an arc protrusion is disposed in a central region where the basal plate and the elastic plate are opposite.

The present application further provides a 3D printer, comprising: a printing platform, a liquid containing device, a mounting base, a module, and an exposure mechanism; the printing platform is driven to move by the module; the liquid containing device is mounted on the mounting base; the exposure mechanism emits radiation light of a specified shape, which is projected into the liquid containing device to cure liquid photosensitive resin in a specified region; the liquid containing device comprises: a fixing structure, at least a part of the fixing structure constituting a side wall of the liquid containing device, and the liquid containing device being configured to be capable of being fixed on the mounting base of the 3D printer by the fixing structure; and a layered film separating structure, at least a part of the film separating structure constituting a bottom of the liquid containing device and forming, together with the fixing structure, a liquid containing space for accommodating a liquid printing material; wherein the film separating structure comprises a light-transmissive release film.

Further, the film separating structure further comprises: an elastic plate disposed below the release film; and a basal plate disposed below the elastic plate, and a gap being present between the basal plate and the elastic plate to form a fluid channel between the basal plate and the elastic plate.

Further, the elastic plate, the basal plate and the release film are transparent; and the fixing structure comprises an annular frame and an annular bottom bracket, and the bottom bracket is disposed below the frame.

Further, the elastic plate is made of one or more types of glass of: soda-lime glass, medium-alumina glass, and high-alumina glass.

Further, the release film is a semipermeable film.

Further, an arc protrusion is disposed in a central region where the basal plate and the elastic plate are opposite.

The present application further provides a liquid containing device for 3D printing, comprising: a fixing structure, at least a part of the fixing structure constituting a side wall of the liquid containing device, and the liquid containing device being configured to be capable of being fixed on a mounting base of a 3D printer by the fixing structure; and a layered film separating structure, at least a part of the film separating structure constituting a bottom of the liquid containing device and forming, together with the fixing structure, a liquid containing space for accommodating a liquid printing material; wherein the film separating structure comprises a release film, an elastic plate and a basal plate; the elastic plate is disposed below the release film; the basal plate is disposed below the elastic plate, and a gap is present between the basal plate and the elastic plate to form a fluid channel between the basal plate and the elastic plate; and the elastic plate and the basal plate are mounted on the mounting base of the 3D printer.

Further, the elastic plate, the basal plate and the release film are transparent.

Further, the fixing structure comprises an annular frame and an annular bottom bracket, and the bottom bracket is disposed below the frame.

Further, the release film is fixed between the frame and the bottom bracket.

Further, the frame constitutes a side wall of the liquid containing device, and the liquid containing device is fixed on a base of a 3D printer by the bottom bracket.

Further, a spacer is provided between the basal plate and the elastic plate to form a gap between the basal plate and the elastic plate.

Further, the spacer is an separated FEP tape having a thickness of 0.1 mm ~ 0.2 mm.

Further, the separated FEP tape is disposed in an array arrangement on the basal plate and arranged at an edge position of a projection plane of the elastic plate on the basal plate.

Further, an arc protrusion is disposed in a central region where the basal plate and the elastic plate are opposite.

Further, at least one of opposing surfaces of the elastic plate and the basal plate is a rough surface.

Further, the elastic plate is made of one or more types of glass of: soda-lime glass, medium-alumina glass, and high-alumina glass.

Further, the release film is made of one or more materials of: FEP, NFEP, TPX, and AF2400.

Further, the release film is a semipermeable film.

Further, the elastic plate is coated with a layer of a PET thin film.

The present application further provides a 3D printer, comprising: a printing platform, a liquid containing device, a mounting base, a module, and an exposure mechanism; the printing platform is driven to move by the module; the liquid containing device is mounted on the mounting base; the exposure mechanism emits radiation light of a specified shape, which is projected into the liquid containing device to cure liquid photosensitive resin in a specified region; the liquid containing device comprises: a fixing structure, at least a part of the fixing structure constituting a side wall of the liquid containing device, and the liquid containing device being configured to be capable of being fixed on the mounting base of the 3D printer by the fixing structure; and a layered film separating structure, at least a part of the film separating structure constituting a bottom of the liquid containing device and forming, together with the fixing structure, a liquid containing space for accommodating a liquid printing material; wherein the film separating structure comprises a release film, an elastic plate and a basal plate; the elastic plate is disposed below the release film; the basal plate is disposed below the elastic plate, and a gap is present between the basal plate and the elastic plate to form a fluid channel between the basal plate and the elastic plate; and the elastic plate and the basal plate are mounted on the mounting base of the 3D printer.

Further, the elastic plate, the basal plate and the release film are transparent.

Further, the fixing structure comprises an annular frame and an annular bottom bracket, and the bottom bracket is disposed below the frame.

Further, the release film is fixed between the frame and the bottom bracket.

Further, the frame constitutes a side wall of the liquid containing device, and the liquid containing device is fixed on a base of the 3D printer by the bottom bracket.

Further, a spacer is provided between the basal plate and the elastic plate to form a gap between the basal plate and the elastic plate.

Compared with the prior art, the present application at least includes beneficial technical effects: since vacuum suction force between the release film and the elastic plate is eliminated, film separating force is significantly reduced, and with the reduction of the film separating force, time for lamellar printing is also shorter, effectively shortening molding time of 3D printing. Due to the reduction of the film separating force, deformation of the release film is reduced, effectively prolonging a service life.

The conception, specific structure, and generated technical effect of the present application will be further described below in combination with the drawings, so as to fully understand the purpose, feature, and effect of the present application.

### Brief Description of the Drawings

FIG. 1 is a schematic diagram of a film separating solution before improvement;
FIG. 2 is an overall schematic diagram of a liquid containing device of a preferred embodiment of the present application;
FIG. 3 is a schematic sectional diagram of a liquid containing device of a preferred embodiment of the present application;
FIG. 4 is a partial enlarged view of a preferred embodiment of the present application;
FIG. 5 is a schematic diagram of step 1 of a film separating process of the present application;
FIG. 6 is a schematic diagram of step 2 of the film separating process of the present application;
FIG. 7 is a schematic diagram of step 3 of the film separating process of the present application;
FIG. 8 is a schematic diagram when a vacuum state is broken at step 3 of the film separating process of the present application;
FIG. 9 is a graph of film separating force values varying with printing time before/after improvement;
FIG. 10 is a schematic diagram of an overall structure of a 3D printer of a preferred embodiment of the present application;
FIG. 11 is a schematic diagram of providing a rough surface on an elastic plate;
FIG. 12 is a schematic diagram of providing a rough surface on a basal plate;
FIG. 13 is a schematic diagram of providing a rough surface on both an elastic plate and a basal plate;
FIG. 14 is a schematic diagram of providing an arc protrusion in a central region of an elastic plate and a basal plate;
FIG. 15 is a schematic mounting diagram of another embodiment of the present application, wherein a release film is disposed at a bottom of a liquid containing device, and an elastic plate and a basal plate are disposed on a mounting base;
FIG. 16 is a schematic sectional diagram of a liquid containing device of another preferred embodiment of the present application;
FIG. 17 is a partial enlarged view of another preferred embodiment of the present application; and
FIG. 18 is a schematic diagram of a liquid containing device working in cooperation with an exposure mechanism of another preferred embodiment of the present application.

In which:
1 - frame, 2 - bottom bracket, 3 - release film, 4 - elastic plate, 5 - basal plate, 6 - first steel ring, 7 - second steel ring, 8 - protruded ridge, 9 - rib, 10 - separated FEP tape, 20 - mounting base, 21 - resin tank, 211 - liquid containing device, 22 - printing platform, 23 - liquid photosensitive resin, 231 - cured model, 24 - module, 25 - optical engine, 26 - reflecting mirror, 90 - exposure mechanism, 91 - radiation light.

### Detailed Description of the Preferred Embodiments

A plurality of preferred embodiments of the present application are introduced below with reference to the drawings of the description, to clarify the technical content of the application. The present application may be embodied in many different forms of embodiments, and the scope of protection of the present application is not limited to the embodiments mentioned herein.

In the drawings, components with a same structure are denoted by a same reference number, and from-place-to-place assemblies with similar structures or functions are denoted by similar reference numbers. The size and thickness of each assembly shown in the drawings are illustrated arbitrarily, and are not limited in the present application. A thickness of a component is enlarged appropriately at some places in the drawings for clear illustration.

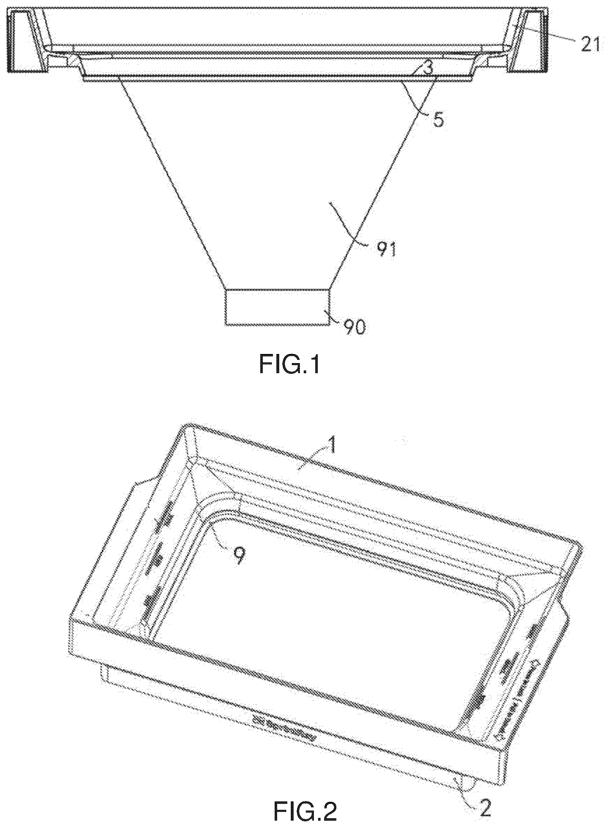

FIG. 1 illustrates a film separating solution before improvement. As shown in FIG. 1, a resin tank 21, as a whole, is in a tray shape, and during operation, liquid photosensitive resin is contained in the resin tank 21. The resin tank 21 is mounted on a mounting base of a 3D printer, generally in a detachable embedded manner. A bottom of the resin tank 21 is a light-transmissive basal plate 5 on which a release film 3 is disposed in an abutting manner. An exposure mechanism 90 emits radiation light 91 which passes through the basal plate 5 and the release film 3, to perform exposure on liquid photosensitive resin contained in the tank 21, and the radiation light 91 is controlled to cure liquid photosensitive resin in a specified region. After curing of each layer is completed, cured liquid photosensitive resin (i.e., a cured model) is bonded to each of a printing platform and the release film 3 of the resin tank 21. When preparation for curing of a next layer, the printing platform of the 3D printer, driven by a linear module, drives the cured model to move, so that the release film 3 is gradually separated from the cured model as it moves with the cured model, thereby completing disengage the cured model from the resin tank 21. However, when film separating by lifting the cured model, since the release film 3 abuts against the surface of the basal plate 5, vacuum suction is generated therebetween, causing relatively large film separating force. The relatively large film separating force generated by this separation mode may cause that fixing of the basal plate 5, which is a printing reference plane, is loosened, and may also cause the cured model to be subjected to situations of edge lifting, falling off, etc., resulting in a poor film separating effect. In addition, there are some other problems, such as a loud noise; and a release film deforms largely, may produce creep and get a shortened service life.

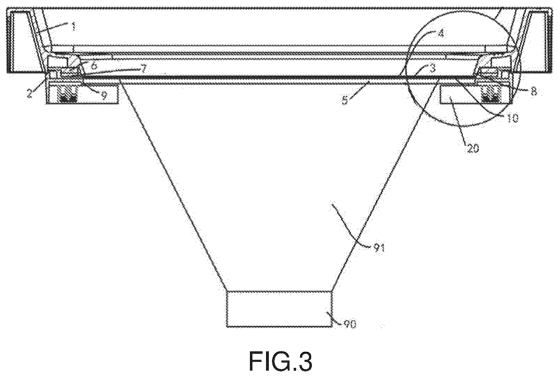

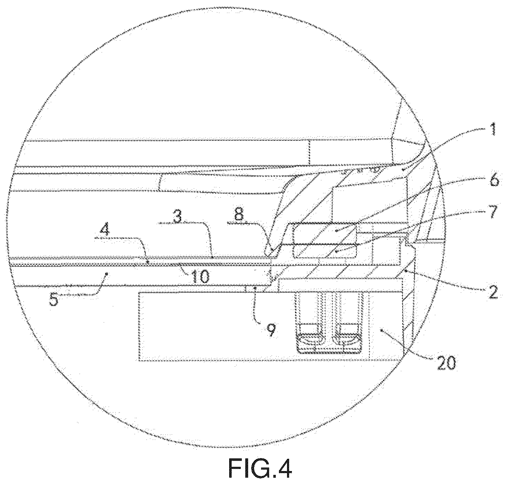

FIG. 2 is an overall schematic diagram of a liquid containing device of a preferred embodiment of the present application, FIG. 3 is a schematic sectional view of FIG. 2 in a vertical direction, and FIG. 4 is a partial enlarged view of FIG. 3, illustrating structures of a liquid containing device and an assembling relationship of the structures.

As shown in FIGS. 2-4, a tank-like liquid containing device 211 includes a frame 1, a bottom bracket 2, a release film 3, an elastic plate 4, and a basal plate 5. The liquid containing device 211 is fixedly mounted on a mounting base 20 of a 3D printer, generally in a detachable embedded manner. The release film 3, the elastic plate 4 and the basal plate 5 are placed sequentially from the frame 1 to the bottom bracket 2. A bottom of the liquid containing device 211 is the light-transmissive basal plate 5, and a spacer is provided on the basal plate 5, and, in this embodiment, is an separated FEP tape 10, above which the elastic plate 4 is placed, and the separated FEP tape 10 spaces apart the basal plate 5 from the elastic plate 4, to form a fluid channel therebetween. The release film 3 is located above the elastic plate 4, and an upper side of the elastic plate 4 abuts against the release film 3. By surrounding via a side wall of the frame 1 and an upper surface of the release film 3, a region for storing a printing solution (typically liquid photosensitive resin) is formed. An exposure mechanism 90 emits radiation light 91 which passes through the basal plate 5, the elastic plate 4 and the release film 3 sequentially, to perform exposure on liquid photosensitive resin contained in a tank, and the radiation light 91 is controlled to cure liquid photosensitive resin in a specified region. After the curing is completed, cured liquid photosensitive resin (i.e., a cured model) is taken out from the liquid containing device, to complete printing of the cured model. Initially, a vacuum state is between the release film 3 and the elastic plate 4, the release film 3 deforms upward by being driven by the cured model via bonding force, and the elastic plate 4 deforms synchronously under the action of vacuum suction. After further lifting, since the release film 3 has an elastic modulus much less than that of the elastic plate 4, the release film 3 is subjected to larger deformation under the action of a bonding force, while the elastic plate 4 is subjected to relatively small deformation. During deformation, the release film 3 and the elastic plate 4 are subjected to tangential shear force at a contact surface, and gradually form a relative movement trend, and the vacuum state therebetween is eliminated; and as the deformation increases, a relative displacement of the release film 3 and the elastic plate 4 occurs in a partial region where they contact each other, thereby completing peeling-off and realizing film separating. Since a film separating process is subjected to a vacuum state only at an initial stage, i.e., a period in which the relative displacement of the release film 3 and the elastic plate 4 does not occur, film separating force is relatively small after vacuum breaking.

As shown in FIGS. 2 and 3, the frame 1 is detachably connected to a first steel ring 6 by a screw, and the first steel ring 6 is detachably connected to a second steel ring 7 by a screw. The release film 3 is fixed between the first steel ring 6 and the second steel ring 7. By surrounding via a side wall of the frame 1 and an upper surface of the release film 3, a region for storing printing solution is formed. The frame 1 is an annular structure with an inner ring extending downward to form a protruded ridge 8 having a position which is lower than a mounting position of the release film 8 in the first steel ring 6 and the second steel ring 7. Therefore, in a process of assembling the first steel ring 6 and the second steel ring 7 to the frame 1, the release film 3 is tightened by the protruded ridge 8, to avoid printing failure due to loosening and wrinkling of the release film 3 in a film separating process. Sealing rings are provided between the first steel ring 6 and the frame 1, and the first steel ring and the release film 3, respectively. The bottom bracket 2 is also an annular structure with an inner ring extending inwardly to form a rib 9, the light-transmissive basal plate 5 is mounted on the rib 9, and an outer-ring side surface of the basal plate 5 and an inner-ring side surface of the bottom bracket 2 are in transition/clearance fit with each other and bonded by glue.

A spacer is provided on the basal plate 5 to space apart the basal plate 5 from the elastic plate 4 to form a fluid channel (in this embodiment, the fluid channel is an air channel) therebetween, so that a non-vacuum state is present between the basal plate 5 and the elastic plate 4 to avoid vacuum suction formed between the elastic plate 4 and the basal plate 5, making that the release film 3 and the elastic plate 4 relatively easily deform. Then vacuum between the release film 3 and the elastic plate 4 is broken by an elasticity moduli difference between the release film and elastic plate, to reduce film separating force to facilitate smooth film separating.

In this embodiment, the release film 3, the elastic plate 4 and the basal plate 5 are each provided as a transparent material, "transparent" meaning that the radiation light 91 emitted by the exposure mechanism 90, after penetrating through the release film 3, the elastic plate 4 and the basal plate 5, has no significant change in terms of a radiation intensity, and can still cause curing of liquid photosensitive resin.

In a preferred embodiment of the present application, the spacer may be an array-type arranged FEP (Fluorinated ethylene propylene) intermittent tape 10, above which the elastic plate 4 is placed. The separated FEP tape 10 preferably has a thickness of 0.1 mm ~ 0.2 mm, more preferably 0.16 mm. The separated FEP tape 10 functions to space apart the basal plate 5 from the elastic plate 4, to form a fluid channel therebetween, so that air is allowed to appear between the release film 3 and the elastic plate 4 in the film separating process to break the vacuum state between the release film and the elastic plate, facilitating film separating. If the separated FEP tape 10 is excessively thick, printing accuracy may be affected if a partial region is recessed since the elastic plate 4 has certain elasticity; and if the separated FEP tape 10 is excessively thin, formation of the fluid channel may be affected.

The separated FEP tape 10 is disposed in an array arrangement on the basal plate 5 and is arranged at an edge position of a projection plane of the elastic plate 4 on the basal plate 5. The edge position refers to a region where light curing is not performed in a printing process. If the separated FEP tape 10 is disposed at a non-edge position (i.e., a printing region), a projection of a lamellar image in the liquid containing device may be affected, thereby affecting printing accuracy.

The elastic plate 4 generally use soda-lime glass, medium-alumina glass, high-alumina glass, and the like are d, and have an elasticity modulus greater than that of the release film 3, approximately 60000 MPa ~ 72000 MPa. The upper side of the elastic plate 4 abuts against the release film 3, and preferably, to easily separate the elastic plate 4 from the release film 3 in a film separating process, the elastic plate 4a may be coated with a layer of a PET thin film to have an anti-adhesion effect. Since the PET thin film has good airtightness, when the release film 3 drives deformation of the elastic plate 4 by means of vacuum suction force, the vacuum state between the release film and the elastic plate still exists for a short time, and, the presence of the PET thin film does not cause that the vacuum state between the release film 3 and the elastic plate 4 vanish in an entire film separating process. In view of vacuum breaking, provision of the PET thin film makes it easier to separate the elastic plate 4 from the release film 3 in the film separating process, facilitating vacuum breaking to some extent. The thin film may be an electroplated layer or other smooth film and plating layer with a non-sticky property.

The release film 3 may be one of FEP, NFEP, TPX, and AF2400, preferably a TPX (Transparent Polymer X) film. In addition, the release film 3 may also be a semipermeable film, such as an air/oxygen-permeable film, through which the liquid photosensitive resin cannot pass. After a film separating process for each layer ends, the release film 3 falls back under the action of gravity of the liquid photosensitive resin and its own weight, and a part of air between the release film 3 and the elastic plate 4 escapes on all sides; the remaining part penetrates through the release film 3 to form an air layer between an upper surface of the release film 3 and a lower surface of the liquid photosensitive resin, and the presence of the air layer hinders a polymerization reaction of the liquid photosensitive resin in that region, which is generally referred to as a dead zone; and the release film 3 is provided as a semipermeable film to facilitate to reduce bonding face of the cured model to the release film 3, thereby reducing the film separating force.

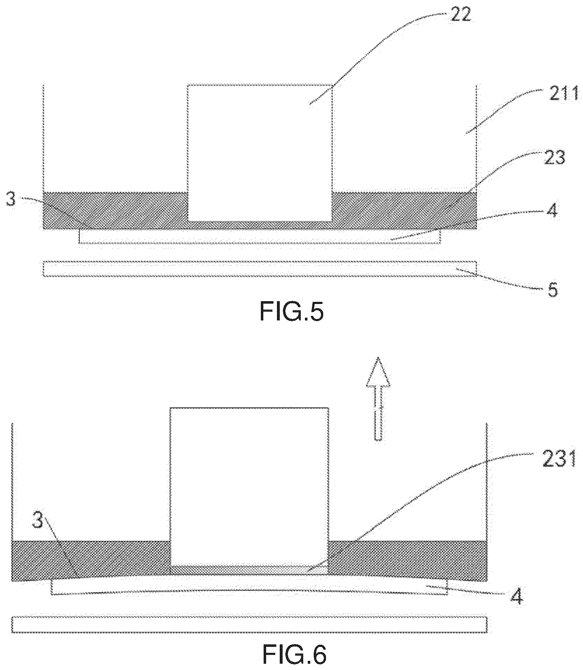

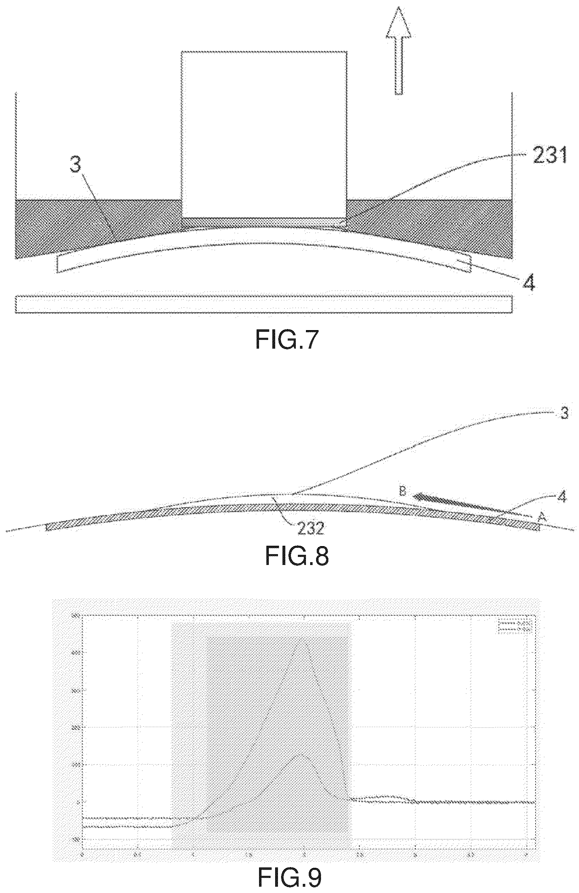

As an embodiment, a film separating process includes:
step 1: as shown in FIG. 5 (note: the separated FEP tape is not shown in the figure), in an initial state of lamellar printing, the module controls the printing platform 22 to descend to a height; and specifically, when printing is initialized, the liquid photosensitive resin 23 between the printing platform 22 and the liquid containing device 211 has a thickness of a layer of a cured model layer; and in a printing process, when the thickness of resin between a latest generated layer of a cured model below the printing platform 22 and the liquid containing device 211 reaches the thickness of a layer of a cured model layer, the exposure mechanism 90 performs exposure to cure liquid photosensitive resin 23 in a specified region;
step 2: as shown in FIG. 6, the stage is a transitional stage, a vacuum state is still between the release film 3 and the elastic plate 4, the cured model 231 drives the release film 3 to deform upward by the bonding force, and the elastic plate 4 deforms synchronously under the action of vacuum suction to maintain the same movement trend as the release film 3; and
step 3: as shown in FIG. 7, after further lifting, since the release film 3 has an elastic modulus much less than that of the elastic plate 4, the release film 3 is subjected to larger deformation under the action of a bonding force, while the elastic plate is subjected to relatively small deformation, the vacuum between the release film 3 and the elastomer plate 4 is broken, and the cured model 231 begins to be gradually separated from the release film 3; and as shown in FIG. 8, which is a schematic diagram when vacuum state breaking, the release film 3 is subjected to relatively large deformation under the action of a bonding force, and vacuum is formed in a partial space; during deformation, the release film 3 and the elastic plate 4 are subjected to tangential shear force at a contact surface, and gradually form a relative movement trend; and as the deformation increases, a relative displacement of the release film 3 and the elastic plate 4 occurs in a partial region where they contact each other, air enters a partial vacuum region 232 from A to B to break vacuum, thus peeling-off of the release film 3 from the elastic plate 4 is completed, and the elastic plate 4 falls back to the spacer, such as the separated FEP tape 10.

FIG. 9 is a graph of film separating force values varying with printing time before/after improvement, wherein a horizontal coordinate is s, a vertical coordinate is N, and it can be seen that film separating force after improvement decreases greatly compared to that before improvement. In addition, since after the film separating force is reduced, the film separating process may be completed with less deformation of the release film, significantly shortening a print cycle, a printing speed is also increased.

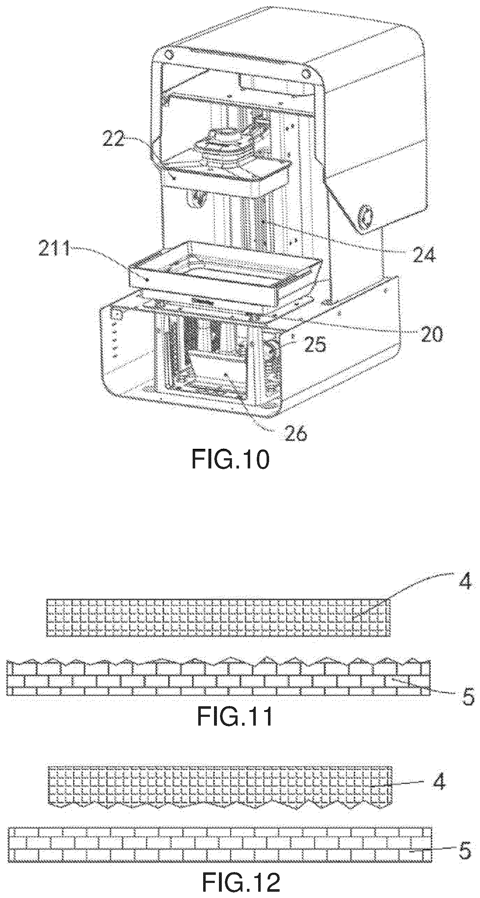

In another embodiment, as shown in FIG. 10, it is an overall schematic diagram of a structure of a 3D printer including the liquid containing device described above, the 3D printer including a printing platform 22, a liquid containing device 211, a mounting base 20, a module 24 for rising and falling, an optical engine 25, and a reflecting mirror 26 for reflecting radiation light to a reference plane. The liquid containing device 211 is mounted on the mounting base 20, generally in a detachable embedded manner, wherein a configuration of the liquid containing device 211 is as shown in FIGS. 3-4, including a frame 1, a bottom bracket 2, a release film 3, an elastic plate 4, and a basal plate 5, with specific structures as described above. The liquid containing device 211 is fixedly mounted on a mounting base 20 of a 3D printer, generally in a detachable embedded manner. The release film 3, the elastic plate 4 and the basal plate 5 are placed sequentially from the frame 1 to the bottom bracket 2. A bottom of the liquid containing device is a light-transmissive basal plate 5, and a spacer is provided on the basal plate 5, and, in this embodiment, is an separated FEP tape 10, above which the elastic plate 4 is placed, and the separated FEP tape 10 spaces apart the basal plate 5 from the elastic plate 4, to form a fluid channel therebetween. The release film 3 is located above the elastic plate 4, and an upper side of the elastic plate 4 abuts against the release film 3. By surrounding via a side wall of the frame 1 and an upper surface of the release film 3, a region for storing a printing solution (typically liquid photosensitive resin) is formed. An exposure mechanism 90 emits radiation light 91 which passes through the basal plate 5, the elastic plate 4 and the release film 3 sequentially, to perform exposure on liquid photosensitive resin contained in a tank, and the radiation light 91 is controlled to cure liquid photosensitive resin in a specified region. After the curing is completed, cured liquid photosensitive resin (i.e., a cured model) is taken out from the liquid containing device 211, to complete printing of the cured model. Initially, a vacuum state is between the release film 3 and the elastic plate 4, the release film 3 deforms upward by being driven by the cured model via bonding force, and the elastic plate 4 deforms synchronously under the action of vacuum suction. After further lifting, since the release film 3 has an elastic modulus much less than that of the elastic plate 4, the release film 3 is subjected to larger deformation under the action of a bonding force, while the elastic plate 4 is subjected to relatively small deformation. During deformation, the release film 3 and the elastic plate 4 are subjected to tangential shear force at a contact surface, and gradually form a relative movement trend, and the vacuum state therebetween is eliminated; and as the deformation increases, a relative displacement of the release film 3 and the elastic plate 4 occurs in a partial region where they contact each other, thereby completing peeling-off and realizing film separating. Since the film separating is not performed in a vacuum state, the film separating force is small.

**In** this embodiment, the optical engine 25 and the reflecting mirror 26 are the exposure mechanisms 90 of the printer, and the radiation light 91, after it is emitted by the optical engine 25 and reflected by the reflecting mirror 26, is projected to the liquid photosensitive resin 23 in the liquid containing device 211 to perform exposure, so as to cure liquid photosensitive resin 23 in a specified region. After the curing is completed, cured liquid photosensitive resin (i.e., the cured model) is taken out from the liquid containing device, to complete printing of the cured model. **In** a printing process of each lamellar layer, the printing platform 22 is driven by the module 24 to move downward to a specified position, the exposure mechanism 90 performs exposure once to cure the liquid photosensitive resin 23 between the printing platform 22 and the liquid containing device 211, and the module 24 drives the printing platform 22 to move upward to complete film separating of a cured layer and prepare for printing of a next layer.

In some other embodiments of the present application, a design of a rough surface may be made for at least one of opposing surfaces of the elastic plate 4 and the basal plate 5, and by surface roughness, contact surfaces are in communication with ambient air, thus avoiding formation of vacuum suction.

FIGS. 11-13 illustrate three solutions of providing a rough surface for an elastic plate and a basal plate. That is, a rough surface is provided on either of opposing surfaces of the elastic plate 4 and the basal plate 5, and a rough surface is provided on both opposing surfaces of the elastic plate 4 and the basal plate 5. Rough structures are illustrated exaggeratedly in the figure, while in practice, they are microscopic structures. A mode to provide a rough surface may be to form a rough surface on an elastic plate/a light-transmissive basal plate by etching or to apply an appropriate coating on glass.

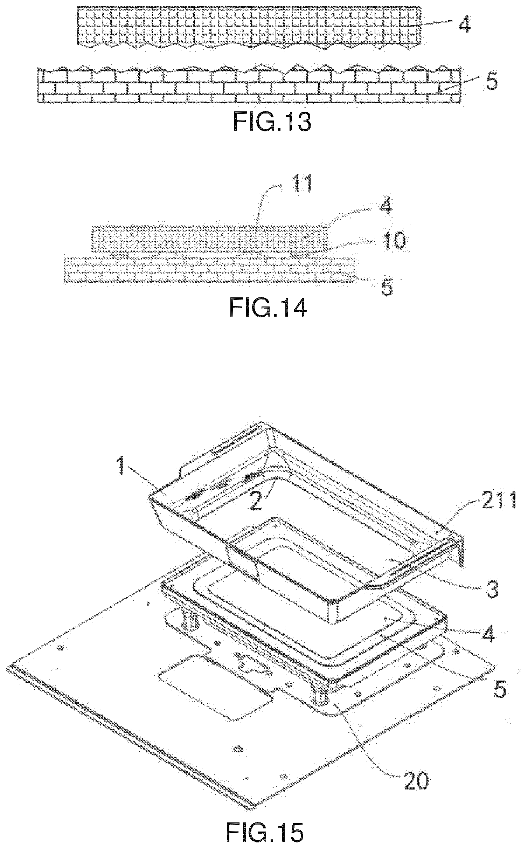

In the aforesaid embodiment, the separated FEP tape is disposed in an array on the basal plate 5 and arranged at an edge position of a projection plane of the elastic plate 4 on the basal plate 5. A center position of the elastic plate is still in an empty and unsupported state, which may cause a recess in the middle by gravity of the liquid photosensitive resin, thus affecting accuracy. Therefore, in another embodiment, after the separated FEP tape is disposed in an array arrangement at the edge position, an arc protrusion 11 may be provided on the elastic plate/light-transmissive basal plate to form support at a middle region, as shown in FIG. 14. In addition, the middle region may also be provided with an separated FEP tape array, and the separated FEP tape is less likely to cause light scattering compared to the arc protrusion.

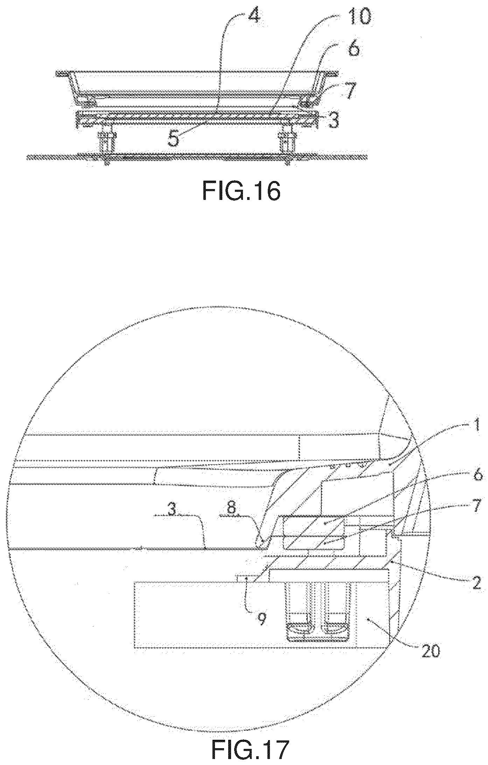

FIG. 15 is an overall schematic diagram of a liquid containing device of a preferred embodiment of the present application. FIG. 16 is a schematic sectional view. A liquid containing device 211 includes a frame 1, a bottom bracket 2, a release film 3, an elastic plate 4, and a basal plate 5. The liquid containing device is fixedly mounted on a mounting base 20 of a 3D printer, generally in a detachable embedded manner. The release film 3 is disposed between the frame 1 and the bottom bracket 2, and the elastic plate 4 and the basal plate 5 are disposed on the mounting base 20 of the 3D printer.

In some embodiments, compared to the aforesaid embodiment, only the release film 3 may be disposed in the liquid containing device 211, and the elastic plate 4 and the basal plate 5 are disposed on the mounting base 20 of the 3D printer. The release film 3 is fixed between a first steel ring 6 and a second steel ring 7 within the liquid containing device 211. An separated FEP tape 10 spaces apart the basal plate 5 from the elastic plate 4.

As shown in FIG. 17, the frame 1 is detachably connected to a first steel ring 6 by a screw, and the first steel ring 6 is detachably connected to a second steel ring 7 by a screw. The release film 3 is fixed between the first steel ring 6 and the second steel ring 7. By surrounding via a side wall of the frame 1 and an upper surface of the release film 3, a region for storing printing solution is formed. The frame 1 is an annular structure with an inner ring extending downward to form a protruded ridge 8 having a position which is lower than a mounting position of the release film 8 in the first steel ring 6 and the second steel ring 7. Therefore, in a process of assembling the first steel ring 6 and the second steel ring 7 to the frame 1, the release film 3 is tightened by the protruded ridge 8, to avoid printing failure due to loosening and wrinkling of the release film 3 in a film separating process. Sealing rings are provided between the first steel ring 6 and the frame 1, and the first steel ring and the release film 3, respectively. The bottom bracket 2 is also an annular structure with an inner ring extending inwardly to form a rib 9.

In this embodiment, the release film 3, the elastic plate 4 and the basal plate 5 are each provided as a transparent material, "transparent" meaning that the radiation light 91 emitted by the exposure mechanism 90, after penetrating through the release film 3, the elastic plate 4 and the basal plate 5, has no significant change in terms of a radiation intensity, and can still cause curing of liquid photosensitive resin.

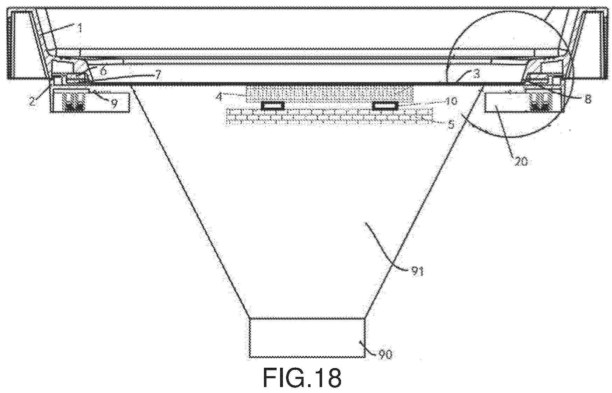

As shown in FIG. 18, a spacer is provided on the basal plate 5, and, in this embodiment, is the separated FEP tape 10 to space apart the basal plate 5 from the elastic plate 4 to form a fluid channel therebetween, so that a non-vacuum state is present between the basal plate 5 and the elastic plate 4 to avoid vacuum suction formed between the elastic plate 4 and the basal plate 5, making that the release film 3 and the elastic plate 4 relatively easily deform. Then vacuum between the release film 3 and the elastic plate 4 is broken by an elasticity moduli difference between the release film and elastic plate, to reduce film separating force to facilitate smooth film separating.

After assembling, by surrounding via a side wall of the frame 1 and an upper surface of the release film 3, a region for storing a printing solution (typically liquid photosensitive resin) is formed. The release film 3 is located above the elastic plate, and an upper side of the elastic plate abuts against the release film 3. The exposure mechanism 90 emits radiation light 91 which passes through the basal plate 5, the elastic plate 4 and the release film 3 sequentially, to perform exposure on liquid photosensitive resin contained in a tank, and the radiation light 91 is controlled to cure liquid photosensitive resin in a specified region. After the curing is completed, the cured liquid photosensitive resin (i.e., the cured model) is taken out from the liquid containing device (i.e., film separating), to complete printing of the cured model. Initially, a vacuum state is between the release film 3 and the elastic plate 4, the release film 3 deforms upward by being driven by the cured model via bonding force, and the elastic plate 4 deforms synchronously under the action of vacuum suction. After further lifting, since the release film 3 has an elastic modulus much less than that of the elastic plate 4, the release film 3 is subjected to larger deformation under the action of a bonding force, while the elastic plate 4 is subjected to relatively small deformation. During deformation, the release film 3 and the elastic plate 4 are subjected to tangential shear force at a contact surface, and gradually form a relative movement trend, and the vacuum state therebetween is eliminated; and as the deformation increases, a relative displacement of the release film 3 and the elastic plate 4 occurs in a partial region where they contact each other, thereby completing peeling-off and realizing film separating. Since a film separating process is subjected to a vacuum state only at an initial stage, i.e., a period in which the relative displacement of the release film 3 and the elastic plate 4 does not occur, film separating force is relatively small after vacuum breaking.

**In** a conventional technical solution, since a vacuum region is present between the basal plate and the release film, relatively large suction force is generated. However, in the present application, a non-vacuum state is present between the basal plate and the elastic plate by spacing apart the basal plate from the elastic plate, making that the release film and the elastic plate relatively easily deform, and then the vacuum between the release film and the elastic plate is broken by an elasticity moduli difference between the release film and the elastic plate. After the vacuum suction force is broken, the film separating force is significantly reduced, and the time for lamellar printing is shortened, effectively shortening molding time of 3D printing.

The preferred specific embodiments of the present application are described in detail above. It should be understood that those skilled in the art can make many modifications and variations without the exercise of inventive effort according to the idea of the present application. Therefore, the technical solution that can be obtained by logical analysis, reasoning or limited experimentation by those skilled in the art on the basis of the prior art according to the idea of the present application shall be within the scope of protection determined by the claims.

## Claims

1. A liquid containing device for 3D printing, **characterized by** comprising:
a fixing structure, at least a part of the fixing structure constituting a side wall of the liquid containing device, and the liquid containing device being configured to be capable of being fixed on a mounting base of a 3D printer by the fixing structure; and
a layered film separating structure, at least a part of the film separating structure constituting a bottom of the liquid containing device and forming, together with the fixing structure, a liquid containing space for accommodating a liquid printing material;
wherein the film separating structure comprises a light-transmissive release film.

2. The liquid containing device for 3D printing according to claim 1, **characterized in that** the film separating structure further comprises:
an elastic plate disposed below the release film; and
a basal plate disposed below the elastic plate, and a gap being present between the basal plate and the elastic plate to form a fluid channel between the basal plate and the elastic plate.

3. The liquid containing device for 3D printing according to claim 2, **characterized in that**:
the elastic plate, the basal plate and the release film are transparent.

4. The liquid containing device for 3D printing according to claim 3, **characterized in that**:
the fixing structure comprises an annular frame and an annular bottom bracket, and
the bottom bracket is disposed below the frame.

5. The liquid containing device for 3D printing according to claim 4, **characterized in that**:
the frame constitutes a side wall of the liquid containing device, and the liquid containing device is fixed on a base of a 3D printer by the bottom bracket; and
the film separating structure is fixed between the frame and the bottom bracket.

6. The liquid containing device for 3D printing according to claim 3, **characterized in that**:
an inner side of the bottom bracket extends inwardly to form a rib on which the basal plate is mounted.

7. The liquid containing device for 3D printing according to claim 2, **characterized in that**:
a spacer is provided between the basal plate and the elastic plate to form a gap between the basal plate and the elastic plate.

8. The liquid containing device for 3D printing according to claim 7, **characterized in that**:
the spacer is an separated FEP tape disposed in an array arrangement on the basal plate and arranged at an edge position of a projection plane of the elastic plate on the basal plate.

9. The liquid containing device for 3D printing according to claim 2, **characterized in that**:
the elastic plate is made of one or more types of glass of: soda-lime glass, medium-alumina glass, and high-alumina glass.

10. The liquid containing device for 3D printing according to claim 1, **characterized in that**:
the release film is made of one or more materials of: FEP, NFEP, TPX, and AF2400.

11. The liquid containing device for 3D printing according to claim 1, **characterized in that** the release film is a semipermeable film.

12. The liquid containing device for 3D printing according to claim 2, **characterized in that** the elastic plate is coated with a layer of a PET thin film.

13. The liquid containing device for 3D printing according to claim 2, **characterized in that** at least one of opposing surfaces of the elastic plate and the basal plate is a rough surface.

14. The liquid containing device for 3D printing according to claim 7, **characterized in that** an arc protrusion is disposed in a central region where the basal plate and the elastic plate are opposite.

15. A 3D printer, **characterized in that**, the 3D printer comprises a printing platform, a liquid containing device, a mounting base, a module, and an exposure mechanism:
the printing platform is driven to move by the module;
the liquid containing device is mounted on the mounting base;
the exposure mechanism emits radiation light of a specified shape, which is projected into the liquid containing device to cure liquid photosensitive resin in a specified region; and
the liquid containing device comprises:
a fixing structure, at least a part of the fixing structure constituting a side wall of the liquid containing device, and the liquid containing device being configured to be capable of being fixed on the mounting base of the 3D printer by the fixing structure; and
a layered film separating structure, at least a part of the film separating structure constituting a bottom of the liquid containing device and forming, together with the fixing structure, a liquid containing space for accommodating a liquid printing material;
wherein the film separating structure comprises:
a light-transmissive release film;
an elastic plate disposed below the release film; and
a basal plate disposed below the elastic plate;
wherein a gap is present between the basal plate and the elastic plate to form a fluid channel between the basal plate and the elastic plate.
